(19) Europäisches Patentamt
European Patent Office
Office européen des brevets

(11) EP 4 742 352 A1

(12) **EUROPEAN PATENT APPLICATION**
published in accordance with Art. 153(4) EPC

(43) Date of publication:
**13.05.2026 Bulletin 2026/20**

(21) Application number: **24908271.0**

(22) Date of filing: **12.12.2024**

(51) International Patent Classification (IPC):
**H01M 10/0562** (2010.01)     **H01M 4/58** (2010.01)
**H01M 4/134** (2010.01)     **H01M 10/052** (2010.01)

(52) Cooperative Patent Classification (CPC):
**H01M 4/134; H01M 4/58; H01M 10/052;**
**H01M 10/0562;** Y02E 60/10

(86) International application number:
**PCT/KR2024/096847**

(87) International publication number:
**WO 2025/135989 (26.06.2025 Gazette 2025/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **19.12.2023 KR 20230186235**

(71) Applicant: **LG Energy Solution, Ltd.**
**Seoul 07335 (KR)**

(72) Inventor: **PARK, So-Dam**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTROLYTE FOR LITHIUM-SULFUR BATTERY**

(57)     The present disclosure relates to an electrolyte for use in a lithium-sulfur battery, including a non-aqueous solvent, a lithium salt and an additive, wherein the additive includes a nitrate salt and a $Li_2S_x$-$P_2S_5$ composite ($1 \leq x$) to improve Coulombic efficiency and life of the lithium-sulfur battery.

FIG. 1

**Description**

TECHNICAL FIELD

The present disclosure relates to an electrolyte that may be used in a lithium-sulfur battery.

This application is based on and claims priority from Korean Patent Application No. 2023-0186235, filed on December 19, 2023, with the Korean Intellectual Property Office, the disclosure of which is incorporated herein in its entirety by reference.

BACKGROUND

As lithium secondary batteries are used in a wide range of applications including not only portable electronic devices but also electric vehicles (EV) and energy storage systems (ESS), there is an increasing demand for lithium secondary batteries with higher capacity, higher energy density and longer life.

Among lithium secondary batteries, lithium-sulfur batteries are a battery system using a sulfur-based material containing a sulfur-sulfur bond as a positive electrode active material, and a lithium metal, a carbon-based material in which intercalation/deintercalation of lithium ions takes place, or silicon or tin that forms an alloy with lithium as a negative electrode active material.

In lithium-sulfur batteries, the theoretical specific capacity based on conversion reaction ($S8 + 16Li^+ + 1\,6e^- \rightarrow 8Li2S$) between lithium ions and sulfur in the positive electrode amounts to 1,675 mAh/g, and when lithium metal is used as the negative electrode, the theoretical energy density is 2,600 Wh/kg. Because this value is higher than the theoretical energy density of other battery systems currently being studied (Ni-MH battery: 450 Wh/kg, Li-FeS battery: 480 Wh/kg, Li-MnO2 battery: 1,000 Wh/kg, Na-S battery: 800 Wh/kg) and lithium ion batteries (250 Wh/kg), lithium-sulfur batteries are gaining attention as a high-capacity, eco-friendly and low-cost lithium secondary battery among secondary batteries developed so far.

However, during charging of lithium-sulfur batteries, lithium ions may be reduced into lithium metal on solid electrolyte interphase (SEI) surface on the negative electrode to form an uneven surface of the negative electrode, causing uneven resistance distribution. When the process of charging and discharging is repeatedly performed, lithium deposits unevenly to form dendrites and inactive lithium.

The dendrites are the major cause of separator damage and short circuits, and in these circumstances, many studies are being made to achieve uniform lithium ion stripping and lithium plating on negative electrode surface of lithium-sulfur batteries.

DISCLOSURE

Technical Problem

To solve the above-described problems, the present disclosure is directed to providing an electrolyte of a new composition for suppressing and preventing the growth of lithium dendrites on a negative electrode.

Specifically, the present disclosure is directed to providing an electrolyte of a new composition that is advantageous in forming a solid electrolyte interphase to suppress and prevent the growth of lithium dendrites on negative electrode surface.

The present disclosure is further directed to providing a lithium-sulfur battery with improved battery life and Coulombic efficiency.

Technical Solution

To achieve the above-described objective,
according to an aspect of the present disclosure, there is provided an electrolyte for a lithium-sulfur battery of the following embodiments.

The electrolyte according to a first embodiment includes:
a non-aqueous solvent, a lithium salt and an additive, wherein the non-aqueous solvent includes an acyclic ether and a conjugated heterocyclic compound, wherein the lithium salt includes a fluorine-containing compound, wherein the additive includes a nitrate salt and a Li2Sx-P2S5 composite ($1 \leq x$), and wherein the Li2Sx-P2S5 composite is included in an amount of 0.1 to 2.5 parts by weight based on total 100 parts by weight of the non-aqueous solvent and the lithium salt.

According to a second embodiment, in the first embodiment,
the Li2Sx-P2S5 composite may include a composite where $1 < x \leq 8$.

According to a third embodiment, in the first or second embodiment,

the Li2Sx- P2S5 composite may be included in an amount of 0.5 to 1.5 parts by weight based on total 100 parts by weight of the non-aqueous solvent and the lithium salt.

According to a fourth embodiment, in any one of the first to third embodiments,

a molar ratio of the Li2SX and the P2S5 in the Li2Sx-P2S5 composite may range from 1:1 to 1:5.

According to a fifth embodiment, in any one of the first to fourth embodiments,

the acyclic ether may be included in an amount of 60 vol% or more based on a total volume of the non-aqueous solvent.

According to a sixth embodiment, in any one of the first to fifth embodiments,

the acyclic ether may include dimethyl ether, diethyl ether, dipropyl ether, dibutyl ether, diisobutyl ether, ethyl methyl ether, ethyl propyl ether, ethyl tertbutyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethyl ether, butylene glycol ether, diethylene glycol ethyl methyl ether, diethylene glycol isopropyl methyl ether, diethylene glycol butyl methyl ether, diethylene glycol tertbutyl ethyl ether, ethylene glycol ethyl methyl ether or a mixture thereof, and preferably dimethoxyethane, diethoxyethane, diethylene glycol dimethyl ether, triethylene glycol dimethyl ether, tetraethylene glycol dimethyl ether or a mixture thereof.

According to a seventh embodiment, in any one of the first to sixth embodiments,

the conjugated heterocyclic compound may include furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2H-pyran, 4H-pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene, benzothiophene or a mixture thereof.

According to an eighth embodiment, in any one of the first to seventh embodiments,

the fluorine-containing compound may include LiBF4, LiPF6, LiAsF6, LiSbF6, LiN(SO2F)2, LiCF3SO3, LiCF3CO2, LiSO3CF3, LiN(SO2CF3)2, LiN(SO2C2F5)2, LiN(SO2F)2, LiC(SO2CF3)3 or a mixture thereof.

According to a ninth embodiment, in any one of the first to eighth embodiments,

a molar concentration of the lithium salt in the non-aqueous solvent and the lithium salt may be 1.0 M or less.

According to another aspect of the present disclosure, there is provided a lithium-sulfur battery of the following embodiments.

The lithium-sulfur battery according to a tenth embodiment includes:

the electrolyte for the lithium-sulfur battery according to any one of the first to ninth embodiments, a positive electrode, a negative electrode, a separator between the negative electrode and the positive electrode and a battery case, wherein the positive electrode includes a sulfur-based compound containing a sulfur (S)-sulfur (S) bond as an active material, and wherein the negative electrode includes a lithium metal layer.

According to an eleventh embodiment, in the tenth embodiment,

the active material of the positive electrode may include a sulfur-carbon composite in which the sulfur-based compound is loaded onto at least one of an outer surface of a porous carbon material and an inside of pores of the porous carbon material.

According to a twelfth embodiment, in the tenth or eleventh embodiment,

the lithium metal layer may include a lithium metal (Li) foil or a lithium alloy foil.

According to a thirteenth embodiment, in any one of the tenth to twelfth embodiments,

the lithium-sulfur battery may include a coin-type battery, a pouch-type battery or a cylindrical battery.

Advantageous Effects

According to an aspect, the electrolyte of the present disclosure may have an advantageous effect on forming the solid electrolyte interphase, specifically an inorganic all-solid-state material-based single-ion conductive thin film on the negative electrode surface. Through this, the electrolyte of the present disclosure may have an effect of suppressing and preventing the growth of lithium dendrites on the negative electrode surface during charging and discharging of lithium-sulfur batteries.

Through this, by using the electrolyte of the present disclosure, lithium-sulfur batteries with improved life and Coulombic efficiency may be provided.

BRIEF DESCRIPTION OF THE DRAWINGS

FIG. 1 is a graph showing life evaluation results of lithium-sulfur batteries manufactured using electrolytes of Example 1, Example 2 and Comparative Example 1 in the present disclosure.

FIG. 2 is a graph showing Coulombic efficiency evaluation results of lithium-sulfur batteries manufactured using electrolytes of Example 1, Example 2 and Comparative Example 1 in the present disclosure.

FIG. 3 is a graph showing life evaluation results of lithium-sulfur batteries manufactured using electrolytes of Example 1, Example 2, Comparative Example 1 and Comparative Example 2 in the present disclosure.

FIG. 4 is a graph showing Coulombic efficiency evaluation results of lithium-sulfur batteries manufactured using electrolytes of Example 1, Example 2, Comparative Example 1 and Comparative Example 2 in the present disclosure.

FIG. 5 is a graph showing life evaluation results of lithium-sulfur batteries manufactured using electrolytes of Example 1, Example 2, Comparative Example 1 and Comparative Example 3 in the present disclosure.

FIG. 6 is a graph showing Coulombic efficiency evaluation results of lithium-sulfur batteries manufactured using electrolytes of Example 1, Example 2, Comparative Example 1 and Comparative Example 3 in the present disclosure.

FIG. 7 is a graph showing life evaluation results of lithium-sulfur batteries manufactured using electrolytes of Example 1, Example 2, Comparative Example 1, and Comparative Example 4 in the present disclosure.

FIG. 8 is a graph showing Coulombic efficiency evaluation results of lithium-sulfur batteries manufactured using electrolytes of Example 1, Example 2, Comparative Example 1 and Comparative Example 4 in the present disclosure.

FIG. 9 is a graph showing a charge/discharge protocol in the first charge/discharge cycle after activation of lithium-sulfur batteries manufactured using electrolytes of Comparative Examples 1 and 4 in the present disclosure.

FIG. 10 is a graph showing a charge/discharge protocol in the first charge/discharge cycle after activation of lithium-sulfur batteries manufactured using electrolytes of Example 2 and Comparative Example 4 in the present disclosure.

## BEST MODE

Hereinafter, the present disclosure will be described in more detail.

The term "composite" as used herein refers to a material in which two or more materials are combined to form physically or chemically different phases and which exhibits more effective functions.

The term "(poly)sulfide" as used herein is the concept that covers "(poly)sulfide ion ($S_x^{2-}$, $1 \leq x \leq 8$)" and "lithium (poly)sulfide ($Li_2S_x$ or $Li_2S_x$- $1 \leq x \leq 8$)".

The term "polysulfide" used herein is the concept that covers "polysulfide ion ($S_x^{2-}$, $1 < x \leq 8$)" and "lithium polysulfide ($Li_2S_x$ or $Li_2S_x$- $1 < x \leq 8$)".

A lithium secondary battery has a characteristic that lithium ions are reduced on the negative electrode surface during charging and discharging, and lithium metal deposits on the negative electrode over repeated charge and discharge cycles.

According to an aspect of the present disclosure, there is provided an electrolyte for a lithium secondary battery for suppressing and preventing dendrite formation of lithium ions on the negative electrode surface including a lithium metal layer, thereby improving the life and Coulombic efficiency of a lithium-sulfur battery using the same. In particular, according to an aspect of the present disclosure, there is provided an electrolyte for use in a lithium-sulfur battery.

The electrolyte according to an aspect of the present disclosure includes a non-aqueous solvent, a lithium salt and an additive.

The role of the non-aqueous solvent may include, for example, dissolving the lithium salt and the additive and acting as an ion transfer medium in the battery, but is not limited thereto.

The role of the lithium salt may include acting as a lithium ion and electron transfer medium between the positive and negative electrodes, but is not limited thereto.

The role of the additive may include preventing decomposition and loss of the lithium salt or having an advantageous effect on forming a protective layer on the negative electrode surface, thereby preventing degradation of the negative electrode and improving the life of the battery, but is not limited thereto, and the additive includes a nitrate salt and a $Li_2S_x$-$P_2S_5$ composite ($1 \leq x$).

According to an aspect of the present disclosure, the $Li_2S_x$-$P_2S_5$ composite is included in an amount of 0.1 to 2.5 parts by weight, based on the total 100 parts by weight of the non-aqueous solvent and the lithium salt.

In an embodiment of the present disclosure, the $Li_2S_x$-$P_2S_5$ composite may, for example, have an advantageous effect on forming a single-ion conductive thin film on the negative electrode surface when used with the nitrate salt in the electrolyte, but the mechanism of action is not limited thereto. However, the $Li_2S_x$-$P_2S_5$ composite contains a sulfur (S)-sulfur (S) bond in the structure, and during charging/discharging of the battery using the electrolyte, the sulfur (S)-sulfur (S) bond may accept electrons (e-) like an active material in the positive electrode, causing overcharging. Accordingly, when the $Li_2S_x$-$P_2S_5$ composite is used in the electrolyte of the lithium-sulfur battery, it is necessary to limit the amount of the $Li_2S_x$-$P_2S_5$ composite in the electrolyte composition.

To this end, the $Li_2S_x$-$P_2S_5$ composite may be included in an amount of 0.1 to 2.5 parts by weight based on the total 100 parts by weight of the non-aqueous solvent and the lithium salt. Specifically, the $Li_2S_x$-$P_2S_5$ composite may be included in an amount of 0.5 to 2.5 parts by weight, 0.5 to 2.0 parts by weight, 0.5 to 1.5 parts by weight, or 1.0 to 1.5 parts by weight based on the total 100 parts by weight of the non-aqueous solvent and the lithium salt.

In this specification, the $Li_2S_x$-$P_2S_5$ composite refers collectively to composites in which lithium (poly)sulfide ($Li_2S_x$, $1 \leq x$) and phosphorus pentasulfide represented by Chemical Formula of $P_2S_5$ or $P_4S_{10}$ are dissolved in the non-aqueous solvent.

In an embodiment of the present disclosure, in the $Li_2S_x$-$P_2S_5$ composite, as the number of sulfur (S)-sulfur (S) bonds in the $Li_2S_x$ structure increases, the number of electrons (e-) that may be accommodated in the electrolyte increases, and accordingly, there may be an increasing effect of suppressing the formation of lithium dendrites on the surface of the negative electrode including the lithium metal layer. Meanwhile, in order to provide an advantageous configuration for forming the composite with phosphorus pentasulfide ($P_2S_5$ or $P_4S_{10}$) through the $Li_2S_x$ structure, in the $Li_2S_x$-$P_2S_5$ composite, x may be a number of 1 or greater, and preferably a number of 1 or greater and 8 or smaller.

In an embodiment of the present disclosure, the $Li_2S_x$-$P_2S_5$ composite may include, for example, a $Li_2S$-$P_2S_5$ composite, a $Li_2S_2$-$P_2S_5$ composite, a $Li_2S_3$-$P_2S_5$ composite, a $Li_2S_4$-$P_2S_5$ composite, a $Li_2S_5$-$P_2S_5$ composite, a $Li_2S_6$-$P_2S_5$ composite, a $Li_2S_7$-$P_2S_5$ composite, a $Li_2S_8$-$P_2S_5$ composite, or a mixture thereof.

In an embodiment of the present disclosure, as described above, in terms of the effect of suppressing and preventing the formation of lithium dendrites on the negative electrode surface, more preferably, the $Li_2S_x$-$P_2S_5$ composite may include a composite where x is greater than 1.

For example, more preferably, the $Li_2S_x$-$P_2S_5$ composite may include a composite where $1 < x \leq 8$, a composite where $2 \leq x \leq 8$, a composite where $3 \leq x \leq 8$, a composite where $4 \leq x \leq 8$, a composite where $5 \leq x \leq 7$, or a composite where $5 \leq x \leq 6$.

In an embodiment of the present disclosure, the $Li_2S_x$-$P_2S_5$ composite may include a $Li_2S_6$-$P_2S_5$ composite.

In an embodiment of the present disclosure, the $Li_2S$-$P_2S_5$ composite may be, for example, formed by mixing $Li_2S$ and $P_2S_5$ in the non-aqueous solvent, but the production method is not limited thereto.

In an embodiment of the present disclosure, the $Li_2S_x$-$P_2S_5$ composite ($1 < x$) may be, for example, formed by mixing $Li_2S$ and $S_8$ in the non-aqueous solvent at a varying molar ratio according to the intended structure of $Li_2S_x$, but the production method is not limited thereto.

In an embodiment of the present disclosure, the $Li_2S_x$-$P_2S_5$ composite may exist as a liquid phase material in the electrolyte. For example, the $Li_2S_x$-$P_2S_5$ composite may exist in a liquid phase at the temperature between 20°C and 60°C.

In an embodiment of the present disclosure, the molar ratio of $Li_2S_X$ and $P_2S_5$ in the $Li_2S_x$-$P_2S_5$ composite may range, for example, from 1:1 to 1:5.

Specifically, the molar ratio of $Li_2S_X$ and $P_2S_5$ in the $Li_2S_x$-$P_2S_5$ composite may range, for example, from 1:1 to 1:4 or from 1:2 to 1:4.

In an embodiment of the present disclosure, the electrolyte may include a composite of $Li_2S_6$ and $P_2S_5$ at the molar ratio of from 1:1 to 1:5.

In an embodiment of the present disclosure, the electrolyte may include a composite of $Li_2S_6$ and $P_2S_5$ at the molar ratio of from 1:1 to 1:4 or from 1:2 to 1:4.

In an embodiment of the present disclosure, the electrolyte may include a composite of $Li_2S_6$ and $P_2S_5$ at the molar ratio of 1:2.

According to an aspect of the present disclosure, the non-aqueous solvent includes an acyclic ether and a conjugated heterocyclic compound.

In an embodiment of the present disclosure, the acyclic ether may be preferably included in an amount of 60 vol% or more based on the total volume of the non-aqueous solvent in terms of improving the solubility of lithium polysulfide eluted from the positive electrode and the solubility of the lithium salt and the nitrate salt.

For example, the acyclic ether may be included in an amount of 60 vol% to 95 vol%, 70 vol% to 90 vol%, 75 vol% to 85 vol%, or 80 vol% based on the total volume of the non-aqueous solvent.

In an embodiment of the present disclosure, the acyclic ether may include, for example, dimethyl ether, diethyl ether, dipropyl ether, dibutyl ether, diisobutyl ether, ethyl methyl ether, ethylpropyl ether, ethyl tertbutyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethyl ether, butylene glycol ether, diethylene glycol ethyl methyl ether, diethylene glycol isopropyl methyl ether, diethylene glycol butyl methyl ether, diethylene glycol tertbutyl ethyl ether, ethylene glycol ethyl methyl ether, or a mixture thereof. Preferably, the acyclic ether may include at least one selected from the group consisting of dimethoxyethane, diethoxyethane, diethylene glycol dimethyl ether, triethylene glycol dimethyl ether and tetraethylene glycol dimethyl ether. More preferably, the acyclic ether may include dimethoxyethane.

In an embodiment of the present disclosure, the acyclic ether may include dimethoxyethane (DME) alone.

In an embodiment of the present disclosure, the conjugated heterocyclic compound refers collectively to compounds having a structure in which p orbitals of three or more neighboring atoms that form the compound may overlap p orbitals of adjacent atoms connected by sigma bonds, and including atoms other than carbon as ring atoms in the structure.

In an embodiment of the present disclosure, when the conjugated heterocyclic compound is included as the non-aqueous solvent, the heterocyclic compound may form a stable solid electrolyte interphase (SEI, also referred to as 'electrode-electrolyte interphase') on the surface of the lithium-based metal (negative electrode) by a ring opening reaction at the initial discharge stage of the battery, thereby suppressing the formation of lithium dendrites. Further, it may be possible to reduce electrolyte decomposition on the lithium-based metal surface and the consequential side reactions, thereby improving the life characteristics of the lithium-sulfur battery. In addition, by the conjugate structure, it may be difficult to dissolve the salt due to the delocalization of lone pair electrons of heteroatoms, typically sulfur atoms, thereby reducing the amount of polysulfide elution into the electrolyte solution.

In an embodiment of the present disclosure, the conjugated heterocyclic compound may include a 4 to 15-membered, preferably 4 to 7-membered, more preferably 5 to 6-membered heterocyclic compound. In addition, the conjugated heterocyclic compound may include a heterocyclic compound substituted or unsubstituted with at least one selected from the group consisting of an alkyl group having 1 to 4 carbon atoms, a cyclic alkyl group having 3 to 8 carbon atoms, an aryl group having 6 to 10 carbon atoms, a halogen group, a nitro group (-NO2), an amine group (-NH2) and a sulfonyl group (-SO2). In addition, the conjugated heterocyclic compound may include a polycyclic compound of at least one of a cyclic alkyl group having 3 to 8 carbon atoms or an aryl group having 6 to 10 carbon atoms and the heterocyclic compound.

When the conjugated heterocyclic compound is substituted with an alkyl group having 1 to 4 carbon atoms, preferably it may be possible to stabilize radicals, thereby suppressing side reactions in the electrolyte solution. In addition, when the conjugated heterocyclic compound is substituted with a halogen group or a nitro group, preferably it may be possible to form a functional protective layer on the lithium-based metal surface, and in this instance, the functional protective layer is stable as a compacted protective layer, having an advantage of allowing uniform deposition of the lithium-based metal, and suppressing side reactions between the polysulfide and the lithium-based metal.

In an embodiment of the present disclosure, the conjugated heterocyclic compound may include at least one of a conjugated cyclic ether compound or a thiophene-based compound.

In an embodiment of the present disclosure, the conjugated cyclic ether compound may include, for example, a furan-based compound and a pyran-based compound, and more specifically, furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2H-pyran, 4H-pyran, 2-methylpyran, 3-methylpyran, 4-methylpyran, benzofuran, 2-(2-nitrovinyl)furan, or a mixture of two or more selected from them, but is not limited thereto.

In an embodiment of the present disclosure, the thiophene-based compound may include, for example, thiophene, 2-methylthiophene, 2-ethylthiophene, 2-propylthiophene, 2-butylthiophene, 2,3-dimethylthiophene, 2,4-dimethylthiophene, 2,5-dimethylthiophene, benzothiophene, or a mixture thereof, but is not limited thereto.

In an embodiment of the present disclosure, in addition to the acyclic ether and the conjugated heterocyclic compound, the non-aqueous solvent may further include a non-conjugated cyclic ether. The non-conjugated cyclic ether may include, for example, at least one selected from the group consisting of 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxy benzene, 1,3-dimethoxy benzene, 1,4-dimethoxy benzene, and isosorbide dimethyl ether. Preferably, the non-conjugated cyclic ether may include at least one selected from the group consisting of 1,3-dioxolane, tetrahydrofuran, 2-methyltetrahydrofuran, and 2,5-dimethyltetrahydrofuran, but is not limited thereto.

In an embodiment of the present disclosure, the non-aqueous solvent may include 1,2-dimethoxyethane (DME) and 2-methylfuran (2-MeF).

Additionally, the non-aqueous solvent may include the acyclic ether and the conjugated heterocyclic compound at a volume ratio of from 95:5 to 5:95, preferably from 95:5 to 50:50, and most preferably from 90:10 to 70:30, or 80:20. The volume ratio corresponds to a ratio of "vol% of the acyclic ether":"vol% of the conjugated heterocyclic compound" in the non-aqueous solvent.

In an embodiment of the present disclosure, in addition to the acyclic ether, the conjugated heterocyclic compound and the non-conjugated cyclic ether compound, the non-aqueous solvent may further include an organic solvent that dissolves the lithium salt and the additive. For example, the organic solvent commonly used in electrolytes of lithium secondary batteries may include ester, amide, acyclic carbonate and cyclic carbonate, and in an embodiment of the present disclosure, in addition to the ether-based solvent, the non-aqueous solvent may further include a non-aqueous solvent commonly used in the electrolyte of the lithium secondary battery described above. However, preferably, in terms of the solubility of the lithium salt, the nitrate salt and the aryl derivative, the electrolyte solution for the lithium secondary battery may not include the carbonate-based solvent as the non-aqueous solvent.

In an embodiment of the present disclosure, the ester may include, for example, any one selected from the group consisting of methyl acetate, ethyl acetate, propyl acetate, methyl propionate, ethyl propionate, propyl propionate, $\gamma$-

butyrolactone, γ-valerolactone, γ-caprolactone, σ-valerolactone and ε-caprolactone or a mixture thereof, but is not limited thereto.

In an embodiment of the present disclosure, the acyclic carbonate may include, for example, any one selected from the group consisting of dimethyl carbonate, diethyl carbonate, dipropyl carbonate, ethylmethyl carbonate, methylpropyl carbonate and ethylpropyl carbonate or a mixture thereof, but is not limited thereto.

In an embodiment of the present disclosure, the cyclic carbonate includes, for example, any one selected from the group consisting of ethylene carbonate, propylene carbonate, 1,2-butylene carbonate, 2,3-butylene carbonate, 1,2-pentylene carbonate, 2,3-pentylene carbonate, vinylene carbonate, vinylethylene carbonate and their halogenides or a mixture thereof. Examples of the halogenides include fluoroethylene carbonate, but are not limited thereto.

In another embodiment of the present disclosure, because the carbonate-based solvent does not dissolve the nitrate salt or has low solubility, the non-aqueous solvent may not include the carbonate-based solvent.

In an embodiment of the present disclosure, the non-aqueous solvent may include the carbonate-based solvent in a very small amount so as not to affect the solubility of the nitrate salt, and for example, when the non-aqueous solvent includes the carbonate-based solvent, the carbonate-based solvent may be included in an amount of 3 wt% or less, 2 wt% or less, 1 wt% or less, 0.5 wt% or less, or 0 wt% (i.e., none) based on the total weight of the electrolyte for the lithium-sulfur battery.

In an embodiment of the present disclosure, the electrolyte for the lithium-sulfur battery includes two or more types of salt compounds. Specifically, the electrolyte for the lithium-sulfur battery includes the lithium salt and the nitrate salt.

In the present disclosure, the lithium salt refers collectively to salt compounds containing lithium ions (Li+) as the cation, and the nitrate salt refers collectively to salt compounds containing nitrate ($-NO_3^-$) as the anion. In this instance, because a compound such as lithium nitrate ($LiNO_3$) contains lithium ions as the cation and nitrate ions as the anion, the lithium nitrate may correspond to both the lithium salt and the nitrate salt, and no matter which one of them the lithium nitrate belongs to, in addition to the lithium nitrate, the electrolyte of the present disclosure further includes one type of lithium salt or nitrate salt.

In particular, according to an embodiment of the present disclosure, the lithium salt includes a fluorine-containing compound.

In an embodiment of the present disclosure, the lithium salt includes a compound containing one or more fluorine (F) atoms as the anion, and specifically, may include a fluorine-containing inorganic compound, a fluorine-containing organic compound, or a mixture thereof.

In an embodiment of the present disclosure, the fluorine-containing inorganic compound may include, for example, LiBF4, LiPF6, LiAsF6, LiSbF6, LiN(SO2F)2 or a mixture thereof, but the present disclosure is not limited thereto.

In an embodiment of the present disclosure, the fluorine-containing organic compound may include, for example, LiCF3SO3, LiCF3CO2, LiSO3CF3, LiN(SO2CF3)2, LiN(SO2C2F5)2, LiN(SO2F)2, LiC(SO2CF3)3 or a mixture thereof, but the present disclosure is not limited thereto.

In an embodiment of the present disclosure, the lithium salt may include the fluorine-containing inorganic compound alone.

In an embodiment of the present disclosure, the lithium salt may include LiN(SO2F)2 alone.

In an embodiment of the present disclosure, in addition to the fluorine-containing compound, the lithium salt may further include a lithium salt that may be used as the lithium salt in the electrolyte of the lithium-sulfur battery without hindering the purpose of the present disclosure. For example, the lithium salt may further include LiCl, LiBr, LiI, LiClO4, LiB10Cl10, LiC4BO8, LiAlCl4, LiSO3CH3, lithium chloroborane, lithium lower aliphatic carboxylic acid, lithium tetraphenylborate, lithium imide or two or more of them.

In an embodiment of the present disclosure, the molar concentration of the lithium salt in the mixture of the non-aqueous solvent and the lithium salt may be limited to, for example, 1.0 M or less. When the concentration of the lithium salt lies in the aforementioned range, this may have a beneficial effect on solubility of the lithium salt in the electrolyte and battery performance improvement effect by the additive, but the present disclosure is not limited thereto.

In an embodiment of the present disclosure, specifically, the molar concentration of the lithium salt in the mixture of the non-aqueous solvent and the lithium salt may range from 0.3 M to 1.0 M, from 0.5 M to 1.0 M, from 0.5 M to 0.8 M, for example, 0.75 M.

In an embodiment of the present disclosure, in addition to the Li2Sx-P2S5 composite (1≤x), the additive includes the nitrate salt.

In an embodiment of the present disclosure, the nitrate salt may be added to stabilize the negative electrode including the lithium metal layer and form a solid electrolyte interphase on the negative electrode surface, and may include any nitrate salt containing one or more nitrate ions (-NO3-) as the anion. For example, the nitrate salt may include an inorganic nitrate salt, an organic nitrate salt or a mixture thereof.

In an embodiment of the present disclosure, the inorganic nitrate salt may typically include lithium nitrate (LiNO3).

In an embodiment of the present disclosure, in terms of the solubility of the nitrate salt, the nitrate salt may be included in an amount of 0.1 to 5 parts by weight, specifically 0.5 to 5 parts by weight, 1 to 5 parts by weight, 2 to 5 parts by weight, or 3 to 5 parts by weight, based on the total 100 parts by weight of the non-aqueous solvent and the lithium salt. When the nitrate salt is included in the aforementioned range of amounts, this may have a beneficial effect on improving the battery life, but the present disclosure is not limited thereto.

As described above, to provide a beneficial effect on suppressing the formation of lithium dendrites on the negative electrode surface and forming a solid electrolyte interphase on the lithium surface when used in the lithium-sulfur battery, the nitrate salt and the Li2Sx-P2S5 composite ($1 \leq x$) are included together as the additive.

In an embodiment of the present disclosure, the nitrate salt and the Li2Sx-P2S5 composite ($1 \leq x$) may be included at a weight ratio of from 9:1 to 1:9 (the nitrate salt: the Li2Sx -P2S5 composite ($1 \leq x$)). Specifically, the nitrate salt and the Li2Sx-P2S5 composite ($1 \leq x$) may be included at the weight ratio of from 9:1 to 1:3, from 9:1 to 1:1, from 8:1 to 1:1, from 7:1 to 1:1, from 6:1 to 1:1, from 6:1 to 2:1, from 5:1 to 2:1, from 4:1 to 2:1, from 3:1 to 2:1 or from 3:1 to 1:1. When the weight ratio of the two types of components lies in the aforementioned range, this may have a beneficial effect on improving the life and Coulombic efficiency of the lithium-sulfur battery using the same, but the present disclosure is not limited thereto.

As described above, according to an aspect of the present disclosure, there is provided the electrolyte of the novel composition having the superior effect of suppressing and preventing degradation of the negative electrode when used in the lithium-sulfur battery.

According to another aspect of the present disclosure, there is provided a lithium-sulfur battery including the electrolyte for the lithium-sulfur battery of the above-described composition.

The lithium-sulfur battery includes the electrolyte, a positive electrode, a negative electrode, a separator between the positive electrode and the negative electrode, and a battery case.

According to an aspect of the present disclosure, the lithium-sulfur battery may refer to a battery including a sulfur-based compound containing a sulfur (S)-sulfur (S) bond as a positive electrode active material and a lithium metal layer as the negative electrode.

In an embodiment of the present disclosure, the lithium metal layer may be a thin film layer including lithium metal (Li) alone.

In another embodiment of the present disclosure, the lithium metal layer may be a thin film layer including lithium and a lithium alloy of lithium and a material that forms an alloy, for example, silicon, tin, sodium, potassium, rubidium, cesium, francium, beryllium, magnesium, calcium, strontium, barium, radium, aluminum or two or more of them.

In an embodiment of the present disclosure, the negative electrode may be in the form of a free-standing film including the lithium metal layer and a protective layer without a support.

In another embodiment of the present disclosure, the negative electrode may include the lithium metal layer and the protective layer on the support.

In this instance, the support may include a polyolefin porous support used as a current collector commonly used in the electrode for the lithium secondary battery or the separator, but is not limited thereto.

In an embodiment of the present disclosure, the current collector is not limited to a particular type and may include those that support the lithium metal layer, and have high conductivity without causing any chemical change in the lithium secondary battery using the same. For example, the current collector may include copper, stainless steel, aluminum, nickel, titanium, palladium, sintered carbon, copper or stainless steel treated with carbon, nickel or silver on the surface, or an aluminum-cadmium alloy.

In an embodiment of the present disclosure, the current collector may include, for example, a copper foil having a thickness of 10 $\mu$m to 30 $\mu$m, for example, 10 $\mu$m.

In addition, the negative electrode according to an embodiment of the present disclosure may further include any component commonly used in the negative electrode of the lithium secondary battery, in particular, the lithium-sulfur battery, without hindering the purpose of the present disclosure.

In an embodiment of the present disclosure, the positive electrode is not limited to a particular type and may include those that include a sulfur-based compound containing a sulfur (S)-sulfur (S) bond as the active material.

In an embodiment of the present disclosure, the positive electrode may include a positive electrode current collector and a positive electrode active material layer on one or two surfaces of the positive electrode current collector.

The positive electrode current collector is not limited to a particular type and may include those that support the positive electrode active material, and have high conductivity without causing any chemical change in the corresponding battery. For example, the positive electrode current collector may include copper, stainless steel, aluminum, nickel, titanium, palladium, sintered carbon, copper or stainless steel treated with carbon, nickel or silver on the surface, or an aluminum-cadmium alloy.

The positive electrode current collector may have the microtextured surface to increase the bond strength with the positive electrode active material, and may come in different forms, for example, film, sheet, foil, mesh, net, porous body, foam or non-woven fabric.

The positive electrode active material layer includes the positive electrode active material and may further include a conductive material, a binder and an additive.

In an embodiment of the present disclosure, the positive electrode active material may include a sulfur-carbon composite.

In an embodiment of the present disclosure, the sulfur-carbon composite may include a porous carbon material; and a sulfur-based compound loaded onto at least one of an outer surface of the porous carbon material or the inside of pores of the porous carbon material. Because sulfur acting as the positive electrode active material has no electrical conductivity, it is used in combination with a conductive material such as the carbon material, and the porous carbon material may be used to load the sulfur. In addition, the sulfur-based compound may include, for example, inorganic sulfur (S8), lithium sulfide (Li2S), lithium polysulfide (Li2Sx, $1 < x \leq 8$), a disulfide compound, a carbon-sulfur polymer ((C2Sy)n, y = 2.5 to 50, $n \geq 2$), lithium sulfide (Li2S) or two or more of them. Preferably, the sulfur-based compound may include inorganic sulfur (S8).

In an embodiment of the present disclosure, the porous carbon material is used to load the sulfur-based compound as the positive electrode active material, provide the skeleton for holding the sulfur-based compound uniformly and stably and improve the conductivity of the positive electrode, and is not limited to a particular type and may include any carbon material having porous properties.

The porous carbon material may be spherical, rod-like, needle-like, platy, tubular or bulky in shape, and is not limited to a particular shape and may have any shape commonly used in the lithium-sulfur battery. The porous carbon material may include any commonly used ones having a porous structure or high specific surface area.

For example, the porous carbon material may include at least one selected from the group consisting of graphite; graphene; carbon black such as Denka black, acetylene black, Ketjen black, channel black, furnace black, lamp black or thermal black; carbon nanotubes (CNTs) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); and graphite such as natural graphite, artificial graphite or expandable graphite and activated carbon, but is not limited thereto. Preferably, the porous carbon material may be carbon nanotubes.

In an embodiment of the present disclosure, the porous carbon material may include, for example, carbon nanotubes (CNT).

In an embodiment of the present disclosure, the sulfur-carbon composite may include the sulfur-based compound in an amount of 65 wt% or more, for example, from 65 wt% to 90 wt%, from 65 wt% to 85 wt%, from 70 wt% to 80 wt%, or from 70 wt% to 75 wt%, based on the total weight of the sulfur-based compound and the porous carbon material.

When the amount of the sulfur-based compound in the sulfur-carbon composite lies in the aforementioned range, it may be preferred in terms of electron transfer area of the sulfur-carbon composite and electrolyte wettability of the positive electrode, and for example, it may be preferred in increasing the usable surface area in the sulfur-carbon composite, thereby suppressing the elution of sulfur from the positive electrode, but the present disclosure is not limited thereto.

The method for producing the sulfur-carbon composite is not limited to a particular one in the present disclosure, and may include any method commonly used in the art. For example, one of the methods may include simply mixing the sulfur and the porous carbon material and performing thermal treatment to form a composite.

In addition to the above-described composition, the positive electrode active material may include at least one selected from transition metal elements, Group IIIA elements, Group IVA elements, sulfur compounds of these elements and alloys of these elements and sulfur.

The transition metal elements may include Sc, Ti, V, Cr, Mn, Fe, Co, Ni, Cu, Zn, Y, Zr, Nb, Mo, Tc, Ru, Rh, Pd, Os, Ir, Pt, Au or Hg, the Group IIIA elements may include Al, Ga, In or Ti, and the Group IVA elements may include Ge, Sn or Pb.

In an embodiment of the present disclosure, the conductive material, the binder and other component used in the positive electrode active material layer may include those commonly used in the art and are not limited to particular ones in the present disclosure.

In an embodiment of the present disclosure, the separator separates or insulates the positive electrode from the negative electrode and allows lithium ion transport between the positive electrode and the negative electrode. The separator may be made of a porous non-conductive or insulating material, and is not limited to a particular type and may include any separator commonly used in the lithium secondary battery. The separator may include a free-standing film or a coating layer added to the positive electrode and/or the negative electrode.

In an embodiment of the present disclosure, the electrolyte act as a medium for the movement of ions involved in electrochemical reaction of the lithium secondary battery, for example, the lithium-sulfur battery, and may include the non-aqueous solvent and the lithium salt.

The electrolyte is not limited to a particular type and may include any electrolyte having composition that may be used in the lithium secondary battery, specifically, the lithium-sulfur battery.

In an embodiment of the present disclosure, the lithium-sulfur battery may have a variety of shapes, for example, a coin shape, a pouch shape or a cylindrical shape, but is not limited thereto.

Hereinafter, examples are presented to help the understanding of the present disclosure, but the following examples are provided to describe the present disclosure for illustrative purposes, and it will be apparent to those skilled in the art that a variety of changes and modifications may be made within the technical aspects and scope of the present disclosure, and obviously, such changes and modifications fall within the scope of the appended claims.

[Preparation of electrolyte]

Example 1

Li2S (Sigma-Aldrich) and S8 (Miwon Chemicals) were mixed at a molar ratio of 1:5 (Li2S : S ) in a mixed non-aqueous solvent containing 1,2-dimethoxyethane (DME) and 2-methylfuran (2-MeF) at a volume ratio of 8:2 (v/v) at room temperature (23°C) to prepare a Li2S6 solution, and P2S5 (Sigma-Aldrich) was dissolved such that the molar ratio of Li2S6 and P2S5 is 1:2 to prepare a solution containing a Li2S6-P2S5 composite.

Subsequently, an 8:2 (v/v) mixed non-aqueous solvent of 1,2-dimethoxyethane (DME) and 2-methylfuran (2-MeF) was added to the prepared solution, and lithium bis(fluorosulfonyl)imide (LiFSI), LiN(SO2F)2 and lithium nitrate (LiNO3) were dissolved in a sequential order to prepare an electrolyte.

The as-prepared electrolyte included the Li2S6-P2S5 composite in an amount of 0.5 parts by weight and the LiNO3 in an amount of 3 parts by weight based on the total 100 parts by weight of the non-aqueous solvent and the LiFSI. In addition, the molar concentration of the LiFSI in the non-aqueous solvent and the LiFSI was 0.75 M.

Example 2

An electrolyte was prepared by the same method as Example 1, except that the as-prepared electrolyte included the Li2S6-P2S5 composite in an amount of 1.5 parts by weight based on the total 100 parts by weight of the non-aqueous solvent and the LiFSI.

Comparative Example 1

An electrolyte was prepared with the same composition as Example 1, except that the Li2S6-P2S5 composite was not added.

Specifically, the electrolyte was prepared by dissolving 0.75 M LiFSI and 3 parts by weight of LiNO3 in an 8:2 (v/v) mixed non-aqueous solvent of 1,2-dimethoxyethane (DME) and 2-methylfuran (2-MeF).

Comparative Example 2

An electrolyte was prepared with the same composition as Example 1, except that LiNO3 was not added.

Comparative Example 3

An electrolyte was prepared with the same composition as Example 1, except that a 5:5 (v/v) mixed non-aqueous solvent of 1,2-dimethoxyethane (DME) and 1,3-dioxolane (DOL) was used instead of the 8:2 (v/v) mixed non-aqueous solvent of 1,2-dimethoxyethane (DME) and 2-methylfuran (2-MeF) as the non-aqueous solvent.

Comparative Example 4

An electrolyte was prepared by the same method as Example 1, except that the as-prepared electrolyte included the Li2S6-P2S5 composite in an amount of 3 parts by weight based on the total 100 parts by weight of the non-aqueous solvent and the LiFSI.

Table 1 summarizes the composition of the as-prepared electrolyte below.

[TABLE 1]

| Non-aqueous solvent | Lithium salt | Additive | |
|---|---|---|---|
| | | Based on total 100 parts by weight of non-aqueous solvent + lithium salt | |
| DME:2-MeF (8:2 v/v) | LiFSI, 0.75M | LiNO$_3$, 3 parts by weight | Li$_2$S$_6$-P$_2$S$_5$ (1:2), 0.5 parts by weight |
| | LiFSI, 0.75M | LiNO$_3$, 3 parts by weight | Li$_2$S$_6$-P$_2$S$_5$ (1:2), 1.5 parts by weight |
| | LiFSI, 0.75M | LiNO$_3$, 3 parts by weight | - |
| | LiFSI, 0.75M | - | Li$_2$S$_6$-P$_2$S$_5$ (1:2), 0.5 parts by weight |
| DME:DOL (5:5 v/v) | LiFSI, 0.75M | LiNO$_3$, 3 parts by weight | Li$_2$S$_6$-P$_2$S$_5$ (1:2), 0.5 parts by weight |
| DME:2-MeF (8:2 v/v) | LiFSI, 0.75M | LiNO$_3$, 3 parts by weight | Li$_2$S$_6$-P$_2$S$_5$ (1:2), 3 parts by weight |

[Manufacturing of lithium secondary battery]

A pouch-type lithium-sulfur battery was manufactured using each of the as-prepared electrolytes of Examples 1 and 2 and Comparative Examples 1 to 4 as follows.

First, a 30 μm-thick lithium foil was laminated onto one surface of a 10 μm-thick copper foil to prepare a negative electrode.

Subsequently, as a positive electrode active material, inorganic sulfur (S8) and carbon nanotubes (CNTs) were mixed to prepare a sulfur-carbon composite (S8 70 wt%), and 96 wt% of the as-prepared sulfur-carbon composite and 4 wt% of polyacrylic acid (PAA) as a binder were mixed to prepare a positive electrode slurry composition. The positive electrode slurry composition was coated on an aluminum current collector and dried to manufacture a positive electrode with loading of 3.3 mAh/cm2.

As a separator, a polyethylene separator having a thickness of 16 μm and a porosity of 46 vol% was prepared and positioned between the positive electrode and the negative electrode.

An assembly of the positive electrode/the separator/the negative electrode was placed in a pouch-type case, the as-prepared electrolyte was injected and the lid was closed to seal the case (El/S ratio = 2.4 g/g).

[Performance evaluation of lithium-sulfur battery]

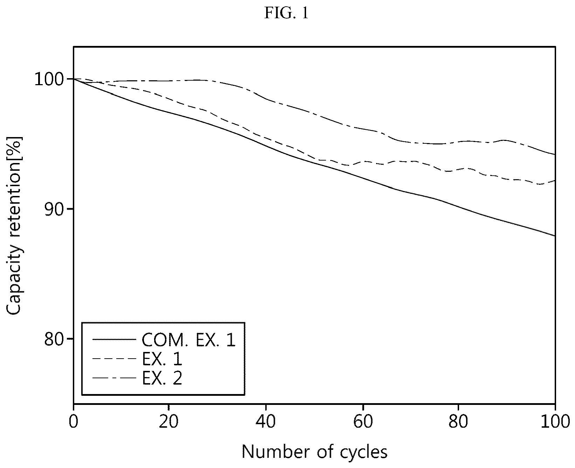

The as-prepared lithium-sulfur battery was aged at room temperature (23°C) for 24 hours, and underwent 0.1C discharge and 0.1C charge twice, and during charging and discharging over the repeated discharge (0.3C) and charge (0.2C) cycles, battery performance was evaluated as follows. FIGS. 1 to 10 show the results.

Life evaluation

The capacity retention over the repeated cycles was evaluated based on discharge capacity 100% measured at the first discharge after the activation.

Coulombic efficiency

In the repeated charge/discharge cycles after the activation, Coulombic efficiency was measured by evaluating a ratio of discharge capacity and charge capacity within one cycle according to the following equation:

$$\text{Coulombic efficiency (\%)} = (\text{Discharge Capacity} / \text{Charge Capacity}) \times 100\%$$

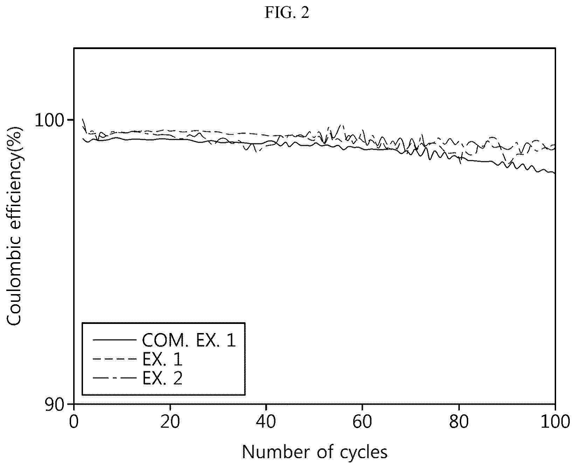

Referring to FIGS. 1 and 2, it was confirmed that life and coulombic efficiency of the lithium-sulfur battery including the Li2Sx-P2S5 composite (1≤x) as the electrolyte additive may be improved.

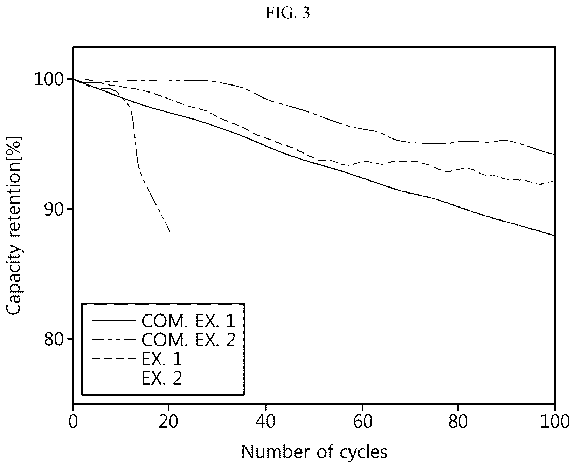

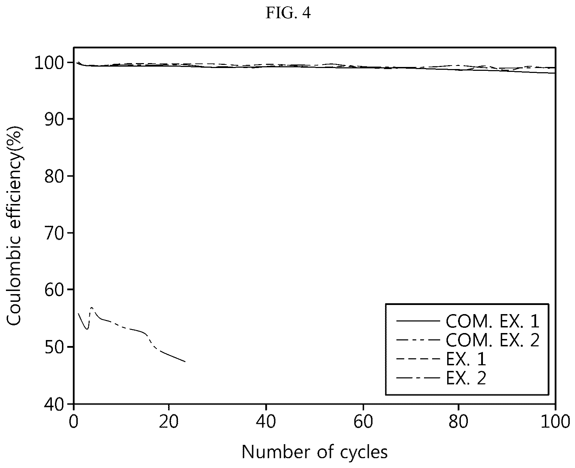

In addition, referring to FIGS. 3 and 4, in the case of Comparative Example 2 using only the Li2Sx-P2S5 composite (1≤x) without nitrate salt as the electrolyte additive, it was confirmed that battery life and Coulombic efficiency were inferior to Comparative Example 1 without the Li2Sx-P2S5 composite (1≤x). Through this, it was confirmed that the Li2Sx-P2S5 composite (1≤x) as the electrolyte additive had a superior battery performance improvement effect when combined with nitrate salt.

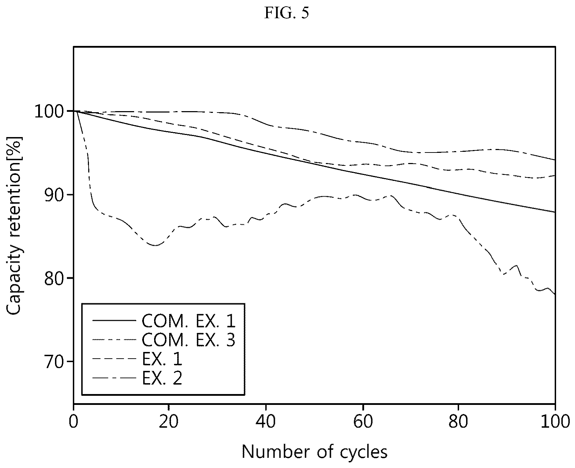

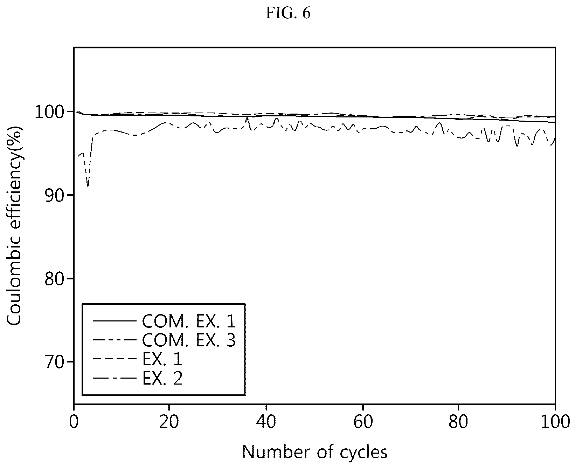

In addition, referring to FIGS. 5 and 6, in the case of Comparative Example 3 including only two types of ether compounds without using the conjugated heterocyclic compound as the non-aqueous solvent when the Li2Sx-P2S5 composite ($1 \leq x$) was used as the electrolyte additive, it was confirmed that battery life and Coulombic efficiency were inferior to Comparative Example 1 without the Li2Sx-P2S5 composite ($1 \leq x$). Through this, it was confirmed that the Li2Sx-P2S5 composite ($1 \leq x$) as the electrolyte additive had a superior battery performance improvement effect when combined with the conjugated heterocyclic compound in the non-aqueous solvent.

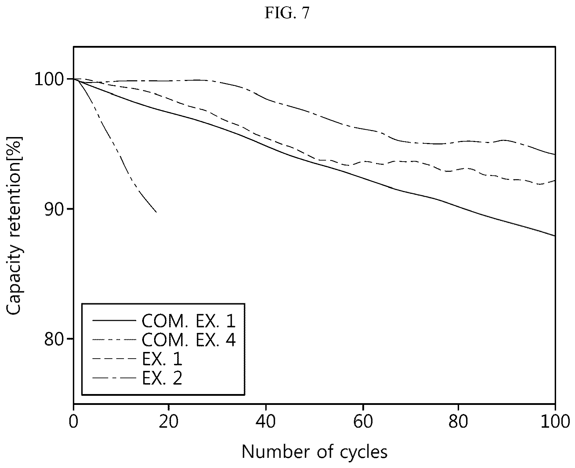

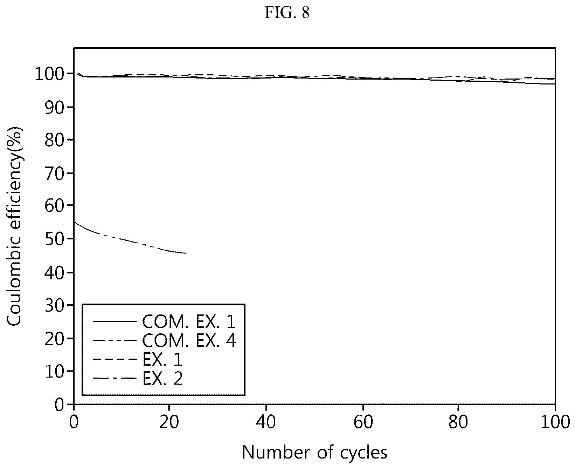

Further, referring to FIGS. 7 and 8, in the case of Comparative Example 4 including the Li2Sx-P2S5 composite ($1 \leq x$) as the electrolyte additive in an excessive amount, in particular, in an amount of more than 2.5 parts by weight based on the total 100 parts by weight of the non-aqueous solvent and the lithium salt, it was confirmed that battery life and Coulombic efficiency rapidly decreased over the repeated charge and discharge cycles.

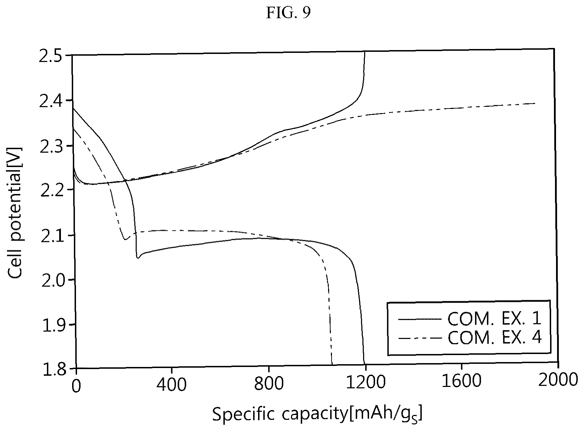

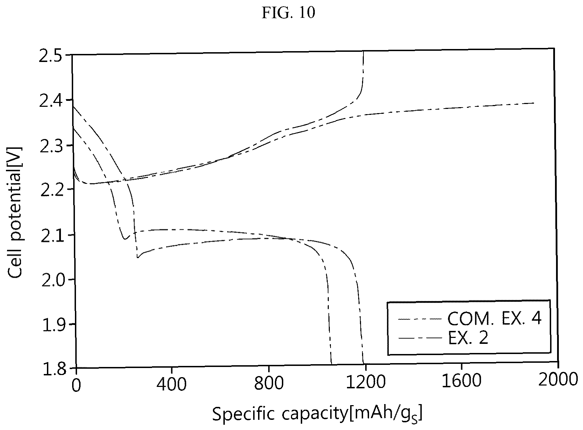

In particular, referring to FIGS. 9 and 10, it was confirmed that the lithium-sulfur battery using the electrolyte of Comparative Example 4 was overcharged during first cycle of charging and discharging after the activation, causing a capacity decline in the battery.

Through the experiment, it was confirmed that the lithium secondary battery, especially the lithium-sulfur battery using the electrolyte according to an embodiment of the present disclosure may have a significant life and Coulombic efficiency improvement effect.

## Claims

1. An electrolyte for a lithium-sulfur battery, comprising:

   a non-aqueous solvent, a lithium salt and an additive,
   wherein the non-aqueous solvent includes an acyclic ether and a conjugated heterocyclic compound,
   wherein the lithium salt includes a fluorine-containing compound,
   wherein the additive includes a nitrate salt and a Li2Sx-P2S5 composite ($1 \leq x$), and
   wherein the Li2Sx-P2S5 composite is included in an amount of 0.1 to 2.5 parts by weight based on total 100 parts by weight of the non-aqueous solvent and the lithium salt.

2. The electrolyte for the lithium-sulfur battery according to claim 1,
   wherein the Li2Sx-P2S5 composite includes a composite where $1<x\leq8$.

3. The electrolyte for the lithium-sulfur battery according to claim 1,
   wherein the Li2Sx-P2S5 composite is included in an amount of 0.5 to 1.5 parts by weight based on total 100 parts by weight of the non-aqueous solvent and the lithium salt.

4. The electrolyte for the lithium-sulfur battery according to claim 1,
   wherein a molar ratio of the Li2SX and the P2S5 in the Li2Sx-P2S5 composite ranges from 1:1 to *1:5.*

5. The electrolyte for the lithium-sulfur battery according to claim 1,
   wherein the acyclic ether is included in an amount of 60 vol% or more based on a total volume of the non-aqueous solvent.

6. The electrolyte for the lithium-sulfur battery according to claim 1,
   wherein the acyclic ether includes dimethyl ether, diethyl ether, dipropyl ether, dibutyl ether, diisobutyl ether, ethyl methyl ether, ethyl propyl ether, ethyl tertbutyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethyl ether, butylene glycol ether, diethylene glycol ethyl methyl ether, diethylene glycol isopropyl methyl ether, diethylene glycol butyl methyl ether, diethylene glycol tertbutyl ethyl ether, ethylene glycol ethyl methyl ether or a mixture thereof, and preferably dimethoxyethane, diethoxyethane, diethylene glycol dimethyl ether, triethylene glycol dimethyl ether, tetraethylene glycol dimethyl ether or a mixture thereof.

7. The electrolyte for the lithium-sulfur battery according to claim 1,
   wherein the conjugated heterocyclic compound includes furan, 2-methylfuran, 3-methylfuran, 2-ethylfuran, 2-propylfuran, 2-butylfuran, 2,3-dimethylfuran, 2,4-dimethylfuran, 2,5-dimethylfuran, 2H-pyran, 4H-pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, 2,5-dimethylthiophene, benzothiophene or a mixture thereof.

8. The electrolyte for the lithium-sulfur battery according to claim 1,
wherein the fluorine-containing compound includes LiBF4, LiPF6, LiAsF6, LiSbF6, LiN(SO2F)2, LiCF3SO3, LiCF3-CO2, LiSO3CF3, LiN(SO2CF3)2, LiN(SO2C2F5)2, LiN(SO2F)2, LiC(SO2CF3)3 or a mixture thereof.

9. The electrolyte for the lithium-sulfur battery according to claim 1,
wherein a molar concentration of the lithium salt in the non-aqueous solvent and the lithium salt is 1.0 M or less.

10. A lithium-sulfur battery comprising:

the electrolyte for the lithium-sulfur battery according to any one of claims 1 to 9, a positive electrode, a negative electrode, a separator between the negative electrode and the positive electrode and a battery case,
wherein the positive electrode includes a sulfur-based compound containing a sulfur (S)-sulfur (S) bond as an active material, and
wherein the negative electrode includes a lithium metal layer.

11. The lithium-sulfur battery according to claim 10,
wherein the active material of the positive electrode includes a sulfur-carbon composite in which the sulfur-based compound is loaded onto at least one of an outer surface of a porous carbon material and an inside of pores of the porous carbon material.

12. The lithium-sulfur battery according to claim 10,
wherein the lithium metal layer includes a lithium metal (Li) foil or a lithium alloy foil.

13. The lithium-sulfur battery according to claim 10,
wherein the lithium-sulfur battery includes a coin-type battery, a pouch-type battery or a cylindrical battery.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| International application No. |
| --- |
| **PCT/KR2024/096847** |

| A. | CLASSIFICATION OF SUBJECT MATTER |
| --- | --- |

**H01M 10/0562**(2010.01)i; **H01M 4/58**(2010.01)i; **H01M 4/134**(2010.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 10/0562(2010.01); H01M 10/05(2010.01); H01M 10/052(2010.01); H01M 10/0567(2010.01); H01M 10/0569(2010.01); H01M 4/04(2006.01); H01M 4/13(2010.01); H01M 4/139(2010.01): H01M 4/36(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 리튬-황 전해질 (lithium-sulfur electrolyte), 비환형 에테르 (acyclic ether), 컨쥬게이트된 헤테로 고리 화합물 (conjugated heterocyclic compound) Li2Sx-P2S5 복합체 (Li2Sx-P2S5 complex)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2021-0127622 A (LG CHEM, LTD.) 22 October 2021 (2021-10-22)<br>See claims 1 and 4-7; and paragraphs [0048], [0049], [0069] and [0070]. | 1-13 |
| A | LIN, Z. et al. Phosphorous pentasulfide as a novel additive for high-performance lithium-sulfur batteries. Advanced Functional Materials. 2013, vol. 23, pp. 1064-1069.<br>See page 1068. | 1-13 |
| A | KR 10-2014-0034087 A (IUCF-HYU (INDUSTRY-UNIVERSITY COOPERATION FOUNDATION HANYANG UNIVERSITY)) 19 March 2014 (2014-03-19)<br>See claims 1-20. | 1-13 |
| A | CN 112701245 A (HUIZHOU YIWEI LITHIUM ENERGY CO., LTD.) 23 April 2021 (2021-04-23)<br>See claims 1-10. | 1-13 |
| A | US 2022-0320492 A1 (TOYOTA JIDOSHA KABUSHIKI KAISHA) 06 October 2022 (2022-10-06)<br>See claim 1. | 1-13 |

| ☐ Further documents are listed in the continuation of Box C. | ☑ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **18 March 2025** | **19 March 2025** |

| Name and mailing address of the ISA/KR | Authorized officer |
| --- | --- |
| **Korean Intellectual Property Office<br>Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 742 352 A1

**INTERNATIONAL SEARCH REPORT**
Information on patent family members

International application No.

**PCT/KR2024/096847**

| Patent document cited in search report | | | Publication date (day/month/year) | Patent family member(s) | | | Publication date (day/month/year) |
|---|---|---|---|---|---|---|---|
| KR | 10-2021-0127622 | A | 22 October 2021 | CN | 114207902 | A | 18 March 2022 |
| | | | | CN | 114207902 | B | 01 October 2024 |
| | | | | EP | 3993130 | A1 | 04 May 2022 |
| | | | | EP | 3993130 | A4 | 14 December 2022 |
| | | | | JP | 2022-542350 | A | 03 October 2022 |
| | | | | JP | 7442618 | B2 | 04 March 2024 |
| | | | | US | 12183889 | B2 | 31 December 2024 |
| | | | | US | 2022-0263136 | A1 | 18 August 2022 |
| | | | | WO | 2021-210854 | A1 | 21 October 2021 |
| KR | 10-2014-0034087 | A | 19 March 2014 | KR | 10-1511206 | B1 | 10 April 2015 |
| | | | | WO | 2014-038919 | A1 | 13 March 2014 |
| CN | 112701245 | A | 23 April 2021 | None | | | |
| US | 2022-0320492 | A1 | 06 October 2022 | JP | 2022-158610 | A | 17 October 2022 |
| | | | | JP | 7416007 | B2 | 17 January 2024 |

Form PCT/ISA/210 (patent family annex) (July 2022)

25

**EP 4 742 352 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20230186235